# EUROPÄISCHE PATENTSCHRIFT

(11) **EP 2 728 237 B1**
(45) Veröffentlichungstag und Bekanntmachung des Hinweises auf die Patenterteilung: **21.11.2018**
(21) Anmeldenummer: 13075068.0
(22) Anmeldetag: 30.09.2013
(51) Int. Cl.: F16L 58/06, F16L 59/14

(54) **Ummanteltes Fernkälteleitungsrohr**
Jacketed remote refrigeration line pipe
Conduite gainée de refroidissement à distance

(30) Priorität: 30.10.2012 DE 102012021700
(43) Veröffentlichungstag der Anmeldung: 07.05.2014
(73) Patentinhaber: Mannesmann Line Pipe GmbH, 57074 Siegen (DE)
(72) Erfinder: Winkels, Jörn, 59457 Werl (DE); Kocks, Hans-Jürgen, 57258 Freudenberg (DE)
(74) Vertreter: Meissner, Peter E.

(56) Entgegenhaltungen:
- WO-A1-2008/099150
- WO-A1-2012/170948
- DE-A1- 3 110 054
- DE-A1- 3 628 776
- DE-B- 1 178 654
- DE-C- 471 575

## Beschreibung

Die Erfindung betrifft ein ummanteltes Fernkälteleitungsrohr gemäß dem Patentanspruch 1. Vorteilhafte Weiterbildungen sind in den jeweiligen Unteransprüchen offenbart.

Aus der DE 1178654 ist ein Rohr, insbesondere für die Leitung von Erdöl bekannt, bei dem auf das zu isolierende Rohr eine Zementschicht aufgebracht, die mit einer bittuminösen elastischen Binde spiralförmig umwickelt ist.

Ebenfalls ein mit einer Zementschicht ummanteltes Metallrohr ist aus der nachveröffentlichten WO 2012/170948 A1 bekannt.

Fernwärme ist seit langem bekannt. Hierbei wird die Wärme in einem zentralen Kraftwerk produziert und dann in einer Rohrleitung zum Endverbraucher geleitet. Die Fernwärme wird dann zum Heizen oder zur Warmwasserbereitung genutzt. Fernkälte funktioniert ähnlich, allerdings mit kaltem Wasser, welches dann zum Kühlen in Klimaanlagen verwendet wird.

Fernkälte ist die kostengünstige und umweltschonende Alternative für die Gebäudeklimatisierung und verursacht um rund 70 Prozent weniger CO₂-Emissionen als konventionelle Klimaanlagen. Fernkälte nutzt die Energie z.B. aus der Müllverbrennung und die Abwärme von Kraftwerksanlagen, die Absorptionskältemaschinen in den so genannten Kältezentralen als Antriebsenergie zugeführt wird. Diese Zentralen erzeugen das Klimakaltwasser, das zur Kühlung der Gebäude benötigt wird. Das zwischen 3 und 15°C kalte Klimakaltwasser gelangt über Rohrleitungen in die Kühlanlage des zu kühlenden Gebäudes. Üblich sind Wassertemperaturen von etwa 6°C.

Der Nutzen für die Umwelt ist beachtlich, da im Vergleich zu herkömmlichen Klimaanlagen Fernkälte weniger CO₂-Emissionen verursacht und sich etwa die Hälfte des Aufwands für Primärenergie einsparen lässt. Ein Fernkältesystem ist z.B. aus der DE 10 2009 026 181 A1 bekannt.

Rohrleitungen zum Transport von Fernwärme sind beispielsweise aus der DE 31 10 054 A1 bekannt. In diesen Fernwärmeleitungen wird z.B. erhitztes Wasser vom Erzeuger (Kraftwerk, Industrie) zum Endverbraucher transportiert.

Fernwärmeleitungsrohre werden für verschiedene Temperaturbereiche bis etwa 150°C ausgelegt. Sie bestehen häufig aus einem Medienrohr aus Stahl, einer bis zu 50 mm dicken thermisch isolierenden Wärmedämmschicht aus Polyurethan-Hartschaum und einem äußeren umschließenden Mantelrohr aus Kunststoff, z.B. aus Polyethylen.

Grundsätzlich sind solche ummantelten Rohre auch für den Transport von 3 bis 15°C kaltem Wasser geeignet. Diese für die Durchleitung von Wärme ausgelegten ummantelte Rohre sind für den Einsatz als Fernkälteleitungsrohre jedoch nicht optimal, da anders als beim Transport von heißem Wasser beim Transport von kaltem Wasser die Gefahr der Wasserdampfdiffusion und Kondensation an der Außenwand des Mediumrohres und damit ein erhöhtes Korrosionsrisiko besteht.
Da aus Umweltschutzgründen zunehmend auch Fernkälteleitungen benötigt werden, steigt der Bedarf an entsprechend korrosionsfesten, wärmeisolierten und wirtschaftlich herstellbaren Leitungen für diesen Einsatzbereich.
Aufgabe der Erfindung ist es, ein ummanteltes Fernkälteleitungsrohr anzugeben, welches einfach und kostengünstig herstellbar ist und Korrosionsbeständigkeit auch bei Mediumtemperaturen von etwa 3 bis 15°C gewährleistet.
Die erfindungsgemäße Lösung umfasst ein ummanteltes Fernkälteleitungsrohr, insbesondere für den Einsatz von Wassertemperaturen von 3 bis 15°C, bestehend aus einem metallischen mediumführenden Rohr, das mit einer thermisch isolierenden Schicht umgeben ist und einem die thermisch isolierende Schicht umgebenden Mantelrohr, welches dadurch gekennzeichnet ist, dass zwischen dem mediumführenden Rohr und der thermisch isolierenden Schicht eine Schicht aus Zementmörtel angeordnet ist.
Der Vorteil des erfindungsgemäßen ummantelten Fernkälteleitungsrohres ist, dass dieses einfach und kostengünstig herzustellen ist und auch für zu transportierende Medien mit Temperaturen von etwa 3 bis 15°C hervorragend geeignet ist.
Der grundsätzliche Aufbau des bekannten wärmeisolierten Fernwärmeleitungsrohres bleibt erhalten, es wird jedoch für das Fernkälterohr erfindungsgemäß zwischen der thermisch isolierenden Schicht und dem mediumführenden Stahlrohr eine zusätzliche Zementmörtelschicht aufgebracht, die als Korrosionsschutzschicht fungiert. Erfindungsgemäß besteht die thermische Isolierung aus PUR-Hartschaum, der sich auch bei Fernwärmeleitungen bewährt hat.

Bei Versuchen stellte sich heraus, dass übliche zum Korrosionsschutz von Rohrleitungen bekannte Korrosionsschutzsysteme, wie z.B. organische Beschichtungen auf Basis Epoxidharz, Polyurethan, Polyethylen, Polypropylen oder Polyamid hier versagen, da diese Beschichtungen wasserdampfdurchlässig sind und damit ein Ablösen der Beschichtung von der Stahloberfläche begünstigen, was in der Folge zu Korrosion führen kann.
Es wurde außerdem erkannt, dass eine Kondensatbildung zwar nicht verhindert werden kann, dass das kondensierte Wasser aber in den Korrosionsschutz vorteilhaft mit eingebunden werden kann und dadurch die korrosive Wirkung in eine korrosionshemmende Wirkung umgewandelt wird.
Bei den Untersuchungen hat sich gezeigt, dass Zementmörtelummantelungen, die eigentlich als Schutz vor mechanischer Beschädigung von erdverlegten Leitungsrohren bekannt sind, sich hervorragend als Korrosionsschutz für Fernkälteleitungen eignen, da die Zementmörtelschicht das kondensierende Wasser aufnimmt. Dabei bildet der Zement an der Grenzfläche zum Stahl ein alkalisches Milieu, so dass die Korrosion durch eine Passivschichtbildung verhindert wird.
Der besondere Clou der Erfindung besteht also darin, dass die zwischen dem mediumführenden kalten Leitungsrohr und der thermisch isolierenden Schicht aufgebrachte Zementmörtelschicht durch das aufgenommene Kondensatwasser eine korrosionshemmende Wirkung entfaltet, die beim Einsatz der üblichen organischen Korrosionsschutzsysteme für Leitungsrohre nicht erreicht werden kann.
Als günstig haben sich Schichtdicken des auf dem Leitungsrohr aufgebrachten Zementmörtels von etwa 3 bis 20 mm herausgestellt, wobei sich bezüglich Wirtschaftlichkeit und Nutzeffekt Schichtdicken von 5 bis 10 mm als vorteilhaft herausgestellt haben. Die thermisch isolierende Schicht kann je nach Anforderung unterschiedliche Dicken von z.B. 50 bis 100 mm aufweisen.

Das Mantelrohr, welches das so isolierte Leitungsrohr umgibt, besteht erfindungsgemäß aus Kunststoff, wie z.B. aus PVC, Polyethylen oder auch aus Polyamid.

Anhand einer **Figur** wird die Erfindung nachfolgend näher erläutert.
Das erfindungsgemäße Fernkälteleitungsrohr besteht aus einem mediumführenden Stahlrohr 1, welches mit einer thermisch isolierenden Schicht 3 umgeben ist und in einer Dicke von etwa 100 mm aufgebracht wird (Zeichnung ist nicht maßstabsgerecht).
Zwischen dem Rohr 1 und der thermisch isolierenden Schicht 3 ist erfindungsgemäß eine Zementmörtelschicht 2 angeordnet, die als Korrosionsschutz für das Stahlrohr 1 fungiert.

Zum Schutz vor mechanischen Beschädigungen und vor Korrosionseinflüssen, ist das so isolierte Leitungsrohr zusätzlich mit einem Mantelrohr 4 umgeben, welches in diesem Beispiel als PE-Kunststoffrohr ausgeführt ist. Es können aber auch je nach Einsatzbedingungen z.B. Kunststoffrohre aus Polyethylen (PE), Polypropylen (PP), Polyvinylchlorid (PVC) oder Polyamid (PA) eingesetzt werden.

**Bezugszeichenliste**

| **Nr.** | **Bezeichnung** |
|---|---|
| 1 | Rohr |
| 2 | Zementmörtelummantelung |
| 3 | thermisch isolierende Schicht |
| 4 | Mantelrohr |

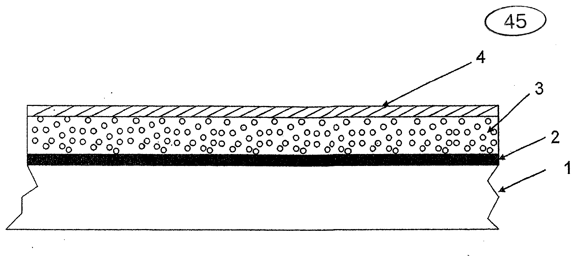

## Patentansprüche

1. Ummanteltes Fernkälteleitungsrohr, insbesondere für den Einsatz von Wassertemperaturen von 3 bis 15°C, bestehend aus einem metallischen mediumführenden Rohr (1), welches mit einer thermisch isolierenden Schicht (3) umgeben ist und einem die thermisch isolierende Schicht umgebenden Mantelrohr (4),
wobei zwischen dem mediumführenden Rohr (1) und der thermisch isolierenden Schicht (3) eine Schicht aus Zementmörtel (2) angeordnet ist,
die thermisch isolierende Schicht (3) aus Polyurethan (PUR)-Hartschaum besteht,
das Mantelrohr aus Kunststoff besteht und die Zementmörtelschicht eine Dicke von 3 bis 20 mm aufweist.

2. Ummanteltels Fernkälteleitungsrohr nach Anspruch 1,
**dadurch gekennzeichnet,**
**dass** das Mantelrohr aus Polyethylen, Polypropylen, PVC oder Polyamid besteht.

3. Ummanteltels Fernkälteleitungsrohr nach Anspruch 1,
**dadurch gekennzeichnet,**
**dass** die Zementmörtelschicht eine Dicke von 5 bis 10 mm aufweist.

## Claims

1. An encased remote refrigeration conduit pipe, in particular for the use of water temperatures from 3 to 15°C, consisting of a metallic, medium-conveying pipe (1), surrounded by a thermally insulating layer (3), and a jacket pipe (4), surrounding the thermally insulating layer,
wherein a layer of cement mortar (2) is arranged between the medium-conveying pipe (1) and
the thermally insulating layer (3),
the thermally insulating layer (3) is composed of polyurethane (PUR) rigid foam,
the jacket pipe is composed of plastics material and the cement mortar layer has a thickness from 3 to 20 mm.

2. An encased remote refrigeration conduit pipe according to claim 1,
**characterised in that**
the jacket pipe is composed of polyethylene, polypropylene, PVC or polyamide.

3. An encased remote refrigeration conduit pipe according to claim 1,
**characterised in that**
the cement mortar layer has a thickness from 5 to 10 mm.

## Revendications

1. Conduite gainée de refroidissement à distance en particulier pour la mise en oeuvre de températures d'eau de 3 à 15 °C, constituée d'un tube métallique (1) acheminant un milieu, qui est entouré par une couche thermo-isolante (3) et un tube de gainage (4) entourant la couche thermo-isolante,
dans laquelle est agencée entre le tube (1) acheminant le milieu et la couche thermo-isolante (3) une couche de mortier au ciment (2),
la couche thermo-isolante (3) est constituée d'une mousse dure de polyuréthane (PUR),
le tube de gainage est constitué d'une matière plastique et la couche de mortier au ciment présente une épaisseur de 3 à 20 mm.

2. Conduite gainée de refroidissement à distance selon la revendication 1,
**caractérisée en ce que**
le tube de gainage est constitué de polyéthylène, de polypropylène, de PVC ou d'un polyamide.

3. Conduite gainée de refroidissement à distance selon la revendication 1,
**caractérisée en ce que**
la couche de mortier au ciment présente une épaisseur de 5 à 10 mm.
